# NEUE EUROPÄISCHE PATENTSCHRIFT

(11) **EP 2 490 289 B2**
(45) Veröffentlichungstag und Bekanntmachung des Hinweises auf die Entscheidung über den Einspruch: **04.03.2020**
(45) Hinweis auf die Patenterteilung: 05.04.2017
(21) Anmeldenummer: 12000970.9
(22) Anmeldetag: 15.02.2012
(51) Int. Cl.: B01J 37/02, B01J 23/40, H01M 8/0612, H01M 8/0662, H01M 8/04007, H01M 8/04014, H01M 8/04, H01M 8/06, H01M 8/04701, H01M 8/124, B01D 53/86

(54) **BRENNSTOFFZELLENSYSTEM**
Fuel cell system
Système de cellules combustibles

(30) Priorität: 17.02.2011 DE 102011011608
(43) Veröffentlichungstag der Anmeldung: 22.08.2012
(73) Patentinhaber: Vaillant GmbH, 42859 Remscheid (DE)
(72) Erfinder: Badenhop, Thomas, 51688 Wipperfürth (DE)
(74) Vertreter: Popp, Carsten

(56) Entgegenhaltungen:
- EP-A1- 1 497 878
- EP-A1- 1 657 771
- EP-A1- 2 284 938
- EP-A1- 2 360 767
- WO-A1-2009/061299
- WO-A2-2007/014127
- WO-A2-2007/014128
- WO-A2-2007/087240
- DE-A1-102008 009 063
- US-A1- 2003 157 380
- US-A1- 2011 159 386

## Beschreibung

Die Erfindung betrifft ein Brennstoffzellensystem mit gestuftem Nachbrenner mit Niedertemperatur-Abgaskatalyse.

In Kraft-Wärme-Koppelungsanlagen (KWK) wird die anfallende Abwärme bei der Stromerzeugung noch genutzt, um andere Verbraucher mit thermischer Energie zu versorgen. Im Falle von Mikro-KWK-Anlagen soll oftmals die Abwärme genutzt werden, um kleinere Gebäude wie Einfamilienhäuser mit Wärme zu versorgen.

Als Stromerzeuger für Mikro-KWK-Anlagen kommen verschiedene Energiewandler in Betracht, die chemische Energie in Form eines Brennstoffs in Strom und Wärme umwandeln können. Erdgasbasierte Brennstoffzellen-Heizgeräte werden für den Einsatz in der Hausenergieversorgung als Mikro-KWK-Anlage derzeit intensiv diskutiert, erforscht und entwickelt. Ein dort eingesetztes Brennstoffzellen-System besteht aus einer Brennstoffzelle bzw. einem Brennstoffzellen-Stapel und gegebenenfalls Zusatzaggregaten wie einem Reformer und einem Nachbrenner.

Technische Brennstoffzellen benötigen in der Regel Wasserstoff als Brennstoff. Eine Wasserstoffinfrastruktur für die Versorgung stationärer Brennstoffzellensysteme, beispielsweise in Gebäuden, steht auch mittelfristig nicht zur Verfügung. Dieser Mangel wird dadurch beseitigt, dass stationäre Brennstoffzellensysteme fossile Brennstoffe nutzen, die in Gebäuden verfügbar sind. Solche Brennstoffe sind beispielsweise Erdgas, Flüssiggas (LPG), Heizöl sowie leichte und schwere Gasöle und Kohle. Des Weiteren können auch biogene Brennstoffe, wie Holz, Holzgas, Biogas oder "Bioerdgas" in solchen Systemen zum Einsatz kommen.

Bei der Verwendung der o.g. Brennstoffe ist der Brennstoffzelle eine Brenngaserzeugung vorgeschaltet, die das benötigte wasserstoffreiche Brenngas aus dem Brennstoff mit Luft und/oder Wasser und/oder Kohlendioxid erzeugt. Typische Brenngaserzeugungsverfahren für stationäre Brennstoffzellensysteme in der Gebäudeversorgung sind Dampfreformierung (SR), Autotherme Dampfreformierung (ATR), Thermische oder katalytische partielle Oxidation (POX), Reformierung mit Kohlendioxid, Wasserdampfvergasung und Vergasung mit (Luft-) Sauerstoff. Die Reformierungsverfahren Autotherme Dampfreformierung (ATR) und die katalytische sowie thermische partielle Oxidation (POX) erfordern keine zusätzliche Wärmequelle.

Im Falle der oxidkeramischen Brennstoffzelle (SOFC) stellt sich die Brenngaserzeugung besonders einfach dar, weil in der Brenngaserzeugungsstufe gebildetes Kohlenmonoxid weder konvertiert noch abgereinigt werden muss. Kohlenmonoxid stellt für SOFC Brennstoffzellen indirekt über den Reaktionsmechanismus

(1) H₂ + ½ O₂ ⇒ H₂O (elektrochemische Umsetzung)

(2) CO + H₂O ⇒ CO₂ + H₂ (Wassergas-Shift)

einen Brennstoff für diesen Brennstoffzellentyp dar. In der Brennstoffzelle wird nicht jeglicher Brennstoff umgesetzt, um die minimale erforderliche Klemmspannung aufrecht zu erhalten; so dass das Anodenabgas noch brennbare Bestandteile enthält.

Alle technischen Brennstoffzellen benötigten Wasserstoff als Brennstoff. Die verschiedenen Brennstoffzellentypen unterscheiden sich u.a. auch in ihren Anforderungen an die Wasser-stoffqualität und Reinheit. Allen Brennstoffzellen ist aber gemeinsam, dass diese mit einem Überschuss an Wasserstoff betrieben werden muss, um ein Absinken der Klemmspannung zu verhindern. Dies bedeutet aber, dass am Anodenausgang der Brennstoffzelle ein sogenanntes Anodenoffgas anliegt, welches noch Wasserstoff und ggf. noch andere brennbare Anteile enthält. Aus Effizienzgründen und Immissionsschutzgründen müssen diese brennbaren Anteile dem Anodenoffgas entzogen werden. Dies ist Aufgabe des Nachbrenners in Brennstoffzellensystemen.

Ebenfalls aus Effizienzgründen ist man bemüht, den Wasserstoffüberschuss an der Anode so gering, wie möglich zu halten. Dies führt dazu, dass ein so genanntes Schwachgas nachverbrannt werden muss, welches nur geringe Volumenanteile an brennbaren Anteilen enthält. In manchen Anwendungen kann es zu dem vorteilhaft sein, das Anodenoffgas mit der Kathodenabluft gemeinsam nachzuverbrennen. Genau wie auf der Anode muss auch ein Sauerstoffüberschuss auf der Kathodenseite eingestellt werden, um den Sauerstoffpartialdruck aufrecht zu erhalten, um Absinken der Klemmspannung zu verhindern. Dies bedeutet, dass die Kathodenabluft noch genügend Sauerstoff mitführt, um das Anodenoffgas vollständig zu oxidieren.

Auch wenn die Kathodenabluft nicht als Oxidator für die Nachverbrennung genutzt wird, sondern Luftsauerstoff als Verbrennungsluft genutzt wird, kommt es dennoch zu einer weiteren Verdünnung des Anodenoffgases durch den Stickstoffanteil der Luft.

Solche Schwachgase können oftmals nicht mehr stabil homogen verbrannt werden, da deren Aktivität für eine homogene Verbrennung nicht mehr ausreicht. Um dennoch eine stabile und sichere Nachverbrennung zu gewährleisten, werden drei verschiedene Konzepte angewendet, die auch mit einander kombiniert werden können:
* Stützfeuerung: Dem Schwachgas werden weitere brennbare Anteile hinzugefügt, um die Aktivität zu steigern. In diesem Fall wird quasi kein Schwachgas mehr verbrannt.
* Senkung der Aktivierungsenergie: Durch den Einsatz von Katalysatoren kann die Aktivierungsenergie für die Nachverbrennung abgesenkt werden.
* Vorwärmung: Die Edukte Anodenoffgas und Verbrennungsluft werden vorgewärmt, um die Nachverbrennung stabiler zu gestalten. Oftmals reicht diese Maßnahme schon aus, um ein Schwachgas zu verbrennen.

Aufgabe des katalytischen Nachbrenner (ATO) in solchen Systemen ist es, diese brennbaren Bestandteile, die die Anode verlassen (Anodetailgas) mit einem Oxidator, z.B. Sauerstoff, Luftsauerstoff oder Kathodenabluft vollständig umzusetzen. Weitere Aufgabe des Nachbrenners ist es Prozesswärme für das System oder Nutzwärme, z.B. für die Gebäudeversorgung bereitzustellen.

Aufgabe des Kathodenluftvorwärmers (C-APH) in einem SOFC-System ist es, Umgebungsluft auf eine definierte Temperatur vorzuwärmen, bevor diese der Kathode des SOFC Brennstoffzellen-Stapels zugeführt wird.

Derzeit wird das heiße Abgas des Nachbrenners einem Gas-Gas Wärmeübertrager (Kathodenluftvorwärmer) zugeführt, wo die heißen Abgase des Nachbrenners abgekühlt werden und die angesaugte Umgebungsluft vorgewärmt wird, um dann dem SOFC Stack zugeführt zu werden.

Nachteile dieser Anordnung sind, dass sowohl der Nachbrenner als auch der Kathodenluftvorwärmer abgasseitig Druckverluste verursachen, welche den elektrischen Wirkungsgrad von SOFC Brennstoffzellen negativ beeinflussen durch einen erhöhten Bedarf an Hilfsenergie für die erforderliche Gebläseleistung. Sowohl Nachbrenner als auch Kathodenluftvorwärmer verursachen Wärmeverluste, die den thermischen und somit auch den Gesamtwirkungsgrad von SOFC-Brennstoffzellensystemen negativ beeinflussen. Ebenfalls beanspruchen sowohl Nachbrenner als auch Kathodenluftvorwärmer für sich Bauraum und behindern so einen kompakten Systemaufbau. Darüber hinaus wird der Katalysator des katalytischen Nachbrenners mit 800 bis 900°C betrieben. Dadurch kommt es zur Kontaktsinterung kommerzieller Washcoatings, die die spezifische Oberfläche des Katalysator drastisch herab setzen. Diese Herabsetzung geht mit einem Verlust der Katalysatoraktivität einher.

Bei Brennstoffzellen-Heizgeräten werden derzeit verschiedene Methoden verwendet, um das noch wasserstoffhaltige und brennbare Anodenoffgas oder Anodentailgas nachzuverbrennen, die nachstehend kurz erläutert werden sollen.
* Das Anodenoffgas wird im Reformerbrenner eines Dampfreformers mitverbrannt. In dieser Anwendung kommt das Konzept der Stützfeuerung zum Tragen.
* Offene Nachverbrennung: Bei der offenen Nachverbrennung werden Anodenoffgas und Kathodenabluft direkt hinter dem Brennstoffzellenstapel gemischt und in einer homogenen Reaktion werden die brennbaren Anteile oxidiert
* Katalytischer Nachbrenner: Das Anodenoffgas wird mit der Kathodenabluft oder Luftsauerstoff gemischt und über einen Katalysator geleitet, wo die brennbaren Anteile oxidiert werden.
* Kombination katalytische Nachverbrennung und homogene Reaktion: Anodenoffgas und Kathodenabluft eines SOFC-Systems werden in einer Mischkammer stromabwärts der Brennstoffzelle gemischt und einem Reaktionsraum zugeführt, wo eine homogene Reaktion stattfindet und ein Teil des Anodenoffgases oxidiert wird. Die Mischung wird dann über einen Katalysator geleitet, wo der Rest der brennbaren Bestandteile oxidiert wird.

DE 10 2008 009 063 A1 beschreibt eine Brennstoffzellenanlage, bei der die Abgase der Brennstoffzelle verbrannt werden und anschließend die Abgase abgekühlt werden, wobei die dabei gewonnen Wärme vorzugsweise der Brennnstoffzellenanlage wieder zugeführt wird. Aus US 2003/0157380 A1 ist eine PEM-Brennstoffzellenanlage mit einen katalytischen Nachbrenner Brenner bekannt, bei der ein wassergekühlter Wärmetauscher dem Nachbrenner vorgeschaltet ist, um eine Überhitzung des Katalysators zu verhindern. EP 2 284 938 A1 beschreibt einen Nachbrenner für eine Brennstoffzellenanlage, bei welcher dem katalytischen Brenner neben den Brennstoffzellenabgasen weitere Frischluft zugeführt wird, um die Reaktionstemperatur zu senken. Der zusätzliche Gasstrom erhöht den Druckverlust der Anlage.

Es ist daher Aufgabe der Erfindung, eine Anordnung zu schaffen, bei der die Standzeit des Katalysators eines Nachbrenners in einem SOFC-Brennstoffzellensystem erhöht wird und sein Druckverlust reduziert wird.

Diese Aufgabe wird erfindungsgemäß durch ein Brennstoffzellensystem gemäß dem unabhängigen Anspruch gelöst.

Der erfindungsgemäße Nachbrenner soll eine zuverlässige Reduktion der Emissionen unter die geforderten Grenzwerte für Brennstoffzellensysteme ermöglichen. Dazu wird ein zweistufiger Nachbrenner vorgeschlagen. In der ersten Stufe soll eine homogene Oxidation des Anodenoffgases mit der sauerstoffhaltigen Kathodenabluft bei einer Temperatur ermöglicht werden, die der Temperatur des oxidkeramischen Brennstoffzellenstapels ähnlich ist und bei 800°C bis 850°C liegt. In einer zweiten katalytischen Stufe wird ein Katalysator eingesetzt, welcher bei einem Temperaturniveau bei ca. 350°C arbeitet, wird die Mischung aus sauerstoffhaltiger Kathodenabluft und Anodenoffgas katalytisch nachverbrannt.

Der Vorteil ist, dass die Druckverluste im Abgassystem reduziert werden und dass die Katalysator-Standzeit durch Senkung der Temperaturbelastung erhöht wird. Gleizeitig können die Kosten des Katalysators reduziert werden und auf Katalysatortechnologie von kleinen Verbrennungsmotoren zurückgegriffen werden.

Erfindungsgemäß ist dem Kathodenluftvorwärmer eine Mischkammer für Anodenoffgas und Kathodenabluft und ein dahinter angeordnete Reaktionsraum angeordnet.

Optional ist der als Wärmetauscher wirkende Kathodenvorluftwärmer so gestaltet, dass die Abgastemperatur unter 400 °C, bevorzugt 300 bis 400 °C gesenkt wird. Dadurch wird die geringe Materialbelastung des Katalysators bewirkt.

Ebenfalls optional ist in Anbetracht der niedrigen Abgastemperatur des Katalysators ein Edelmetallkatalysator, vorzugsweise ein Platin-Katalysator, Platin/Palladium-Katalysator, Platin/Palladium/Rhodium-Katalysator, Platin/Ruthenium-Katalysator, Platin/Palladium/Ruthenium-Katalysator oder ein Platin/Palladium/Lanthan-Katalysator.

Erfindungsgemäß ist der Katalysator für die Startphase beheizbar. Dies wird ermöglicht durch einen metallischen Katalysatorträger, auf den das Katalysatormaterial aufgebracht ist, welcher zum Beispiel als Widerstandsheizung beheizt wird.

Material des Katalysatorträgers ist bevorzugt ferritischer Stahl, besonders bevorzugt Sonderedelstahl 1.4760, welcher gut Strom und Wärme leitet.

Als Haftvermittler zwischen Katalysatorträger und Katalysatormaterial kommt Hexaaluminat zum Einsatz, das bevorzugt in einem Sol-Gel-Verfahren aufgebracht wird.

Die Erfindung wird nun anhand der Figur detailliert erläutert.

Es stellt dar:

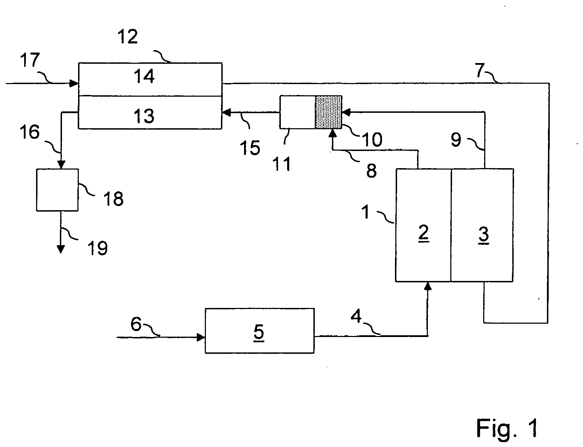

- Figur 1:: Ein erfindungsgemäßes Brennstoffzellensystem.

In Figur 1 ist ein erfindungsgemäßes Brennstoffzellensystem dargestellt.

Einem oxidkeramischen Brennstoffzellenstapel (1) wird der Anode (2) ein wasserstoffreiches Gas, auch Reformat genannt, über die Brenngasleitung (4) zugeführt. Das wasserstoffreiche Gas wird aus einem kohlenwasserstoffreichen Brennstoff, z.B. Erdgas, welches über die Brennstoffleitung zugeführt wird, (6) in dem Reformer (5) erzeugt.

Der Kathode (3) wird vorgewärmte Luft (7) zugeführt. Diese wird in dem Kathodenluftvorwärmer (12) erzeugt, wo die Wärme über abgasseitige Kanäle (13) des Kathodenluftvorwärmers (12) auf die luftseitigen Kanäle (14) übertragen wird.

Das Anodenoffgas (8), ein wasserstoffhaltiges Abgas der Anode enthält noch brennbare Bestandteile, wenn es die Anode (2) verlässt. Das Anodenoffgas (8) wird in der Mischkammer (10) möglichst homogen mit der noch sauerstoffhaltigen Kathodenabluft (9) gemischt und in einem Reaktionsraum (11) eingeleitet, wo die brennbaren Bestandteile mit dem Sauerstoff in einer homogenen Reaktion miteinander reagieren können. Diese homogene Reaktion läuft bei der Temperatur ab, mit der Kathodenabluft und Anodenoffgas die Brennstoffzelle verlassen. Im Falle von oxidkeramischen Brennstoffzellen ist dieses Temperaturniveau bei ca. 800°C bis 850°C anzusetzen.

Das gebildete Abgas (15) nimmt daraufhin ein Temperaturniveau an, welches oberhalb der Betriebstemperatur der Brennstoffzelle liegt. Dadurch ist es geeignet, die Kathodenluft ausreichend vorzuwärmen. Das im Kathodenluftvorwärmer (12) abgekühlte Abgas (16) nimmt eine Temperatur zwischen 300°C und 400°C an und wird einem Abgaskatalysator (18) zugeführt, wo letzte brennbare Bestandteile katalytisch nachverbrannt werden. Das so gereinigte Abgas (19) kann dann in die Umgebung abgegeben werden, da so jetzt alle Immissionsschutzziele sicher eingehalten werden.

Der Katalysator (18) für die Totaloxidation ist vorzugsweise ein Edelmetallkatalysator, wie z.B. Platin-Katalysator, Platin/Palladium-Katalysator, Platin/Palladium/Rhodium-Katalysator, Platin/Ruthenium-Katalysator, Platin/Palladium/Ruthenium-Katalysator oder Platin/Palladium/Lanthan-Katalysator

Dadurch dass die katalytische Abgasreinigung jetzt bei 300 bis 400°C arbeitet, statt wie bisher bei 800 bis 900°C, wird die Kontaktsinterung des Washcoats weitgehend vermieden und die Standzeit signifikant erhöht. Des Weiteren sinkt der Druckverlust über den Katalysator ab, da sich der Volumenstrom durch die Temperaturabsenkung entsprechend dem Boyle Mariott'sches Gesetz verringert.

Zur Vorheizung ist der Katalysator (18) elektrisch beheizbar. Der Katalysator (18) wird auf einen elektrisch leitenden Katalysatorträger aufgebracht, z.B. ein ferritischer Stahl.

Der Sonderedelstahl 1.4760 kann bis 900°C eingesetzt werden und zeichnet sich dabei durch besonders gute Wärme- und elektrische Leitfähigkeit aus. Daher wird hier vorgeschlagen, den Nachbrennerkatalysator auf ein solches Material aufzubringen. Als haftvermittelnde Schicht zwischen Katalysator und metallischen Träger kann ein Hexaaluminat dienen, welches mittels eines Sol-Gel-Verfahrens aufgebracht wird. Zur Erwärmung des Katalysators auf Betriebstemperatur wird ein elektrischer Strom an den Katalysatorträger angelegt. Durch so freiwerdende Joul'sche Wärme erwärmt sich der Katalysatorträger und somit auch der Katalysator. Vorteil dieser Anordnung ist dass der Katalysator durch diese neuartige Art der Vorwärmung gleichmäßig auf Betriebstemperatur gebracht wird. Dies begünstigt die katalytischen Reaktionen auf der Oberfläche des Katalysators. Auch während des Betriebes kann die aktive Komponente elektrisch gefahrlos über den Katalysatorträger weiter erwärmt werden, wenn beispielsweise im Teillastbereich der Katalysator auszukühlen und die katalytische Reaktion zu erliegen zu kommen droht.

### Bezugszeichenliste

- 1: Brennstoffzellenstapel
- 2: Anode
- 3: Kathode
- 4: Brenngasleitung
- 5: Reformer
- 6: Brennstoffleitung
- 7: Vorgewärmte Kathodenluft
- 8: Anodenoffgas
- 9: Kathodenabluft
- 10: Mischkammer
- 11: Reaktionsraum
- 12: Kathodenluftvorwärmer
- 13: Abgasseitige Kanäle des Kathodenluftvorwärmers
- 14: Luftseitige Kanäle des Kathodenluftvorwärmers
- 15: Abgas
- 16: Abgekühltes Abgas
- 17: Frischluft
- 18: Abgaskatalysator
- 19: Gereinigtes Abgas

## Patentansprüche

1. SOFC-Brennstoffzellensystem, insbesondere für den Einsatz in einer Kraft-Wärme-Kopplungsanlage, mit einem Reformer (5), einem Brennstoffzellenstapel (1), einem Abgaskatalysator (18) und einem Kathodenluftvorwärmer (12), wobei der Kathodenluftvorwärmer (12) in Strömungsrichtung des Abgases vor dem Abgaskatalysator (18) vorgesehen ist und wobei in Strömungsrichtung des Abgases vor dem Kathodenluftvorwärmer (12) eine Mischkammer für Anodenoffgas und Kathodenabluft und ein dahinter angeordneter Reaktionsraum (11) angeordnet ist, **dadurch gekennzeichnet, dass** das Katalysatormaterial des Katalysators (18) auf einem elektrisch leitenden Katalysatorträger aufgebracht ist, der elektrisch vorheizbar ist.

2. Brennstoffzellensystem nach Anspruch 1, **dadurch gekennzeichnet, dass** der Katalysatorträger aus einem ferritischen Stahl, bevorzugt aus Sonderedelstahl 1.4760 ist.

3. Brennstoffzellensystem nach Anspruch 1 oder 2, **dadurch gekennzeichnet, dass** als haftvermittelnde Schicht zwischen Katalysatormaterial und Katalysatorträger ein Hexaaluminat dient, welches bevorzugt mittels eines Sol-Gel-Verfahrens aufgebracht ist.

## Claims

1. SOFC fuel cell system, in particular for use in a cogeneration plant, with a reformer (5), a fuel cell stack (1), an exhaust gas catalyst (18) and cathode air pre-heater (12), wherein the cathode air pre-heater (12) is arranged in front of the exhaust gas catalyst (18) in the flow direction of the exhaust gas and wherein a mixing chamber for anode-off gas and cathode exhaust is arranged in front of the cathode air pre-heater (12) in the flow direction of the exhaust gas, and a reaction chamber (11) is arranged behind the mixing chamber, **characterised in that** the catalyst material of the catalyst (18) is applied on an electroconductive catalyst carrier which can be electrically preheated.

2. Fuel cell system according to claim 1, **characterised in that** the catalyst carrier is made of ferritic steel, preferably special stainless steel 1.4760.

3. Fuel cell system according to claim 1 or 2, **characterised in that** the bonding layer between the catalyst material and the catalyst carrier is a hexa-aluminate, which is preferably applied by a sol-gel process.

## Revendications

1. Système de cellules à combustible à oxyde solide SOFC, notamment en vue d'une utilisation dans une installation de cogénération de chaleur et d'électricité, avec un reformeur (5), une pile de cellules à combustible (1), un catalyseur de gaz d'échappement (18) et un réchauffeur préliminaire d'air de cathode (12), dans lequel le réchauffeur préliminaire d'air de cathode (12) est prévu dans le sens d'écoulement du gaz d'échappement devant le catalyseur de gaz d'échappement (18) et dans lequel une chambre de mélange pour le gaz de sortie d'anode et pour le gaz de sortie de cathode ainsi qu'un espace de réaction (11) agencé derrière celle-ci sont agencés dans le sens d'écoulement du gaz d'échappement avant le réchauffeur préliminaire d'air de cathode (12), **caractérisé en ce que** le matériau du catalyseur (18) est appliqué sur un support de catalyseur électriquement conducteur qui peut être chauffé électriquement.

2. Système de cellules à combustible selon la revendication 1, **caractérisé en ce que** le support de catalyseur est en un acier ferritique, de préférence en acier spécial 1.4760.

3. Système de cellules à combustible selon la revendication 1 ou 2, **caractérisé en ce que** l'on utilise comme couche d'accrochage entre le matériau de catalyseur et le support de catalyseur un hexa-aluminate qui est appliqué de préférence au moyen d'un procédé sol-gel.
